Europäisches Patentamt

European Patent Office

Office européen des brevets

(11) Veröffentlichungsnummer: **0 257 601 B1**

# EUROPÄISCHE PATENTSCHRIFT

(45) Veröffentlichungstag der Patentschrift: **25.11.92**

(21) Anmeldenummer: **87112227.1**

(22) Anmeldetag: **22.08.87**

(51) Int. Cl.5: **H02G 3/06**

(54) **Elektrisches Installationsgerät.**

(30) Priorität: **29.08.86 DE 3629429**

(43) Veröffentlichungstag der Anmeldung:
**02.03.88 Patentblatt 88/09**

(45) Bekanntmachung des Hinweises auf die
Patenterteilung:
**25.11.92 Patentblatt 92/48**

(84) Benannte Vertragsstaaten:
**DE ES FR GB**

(56) Entgegenhaltungen:
**AT-B- 307 543**
**DE-A- 1 665 146**
**DE-A- 3 126 455**
**DE-U- 8 615 643**
**FR-A- 2 512 288**

(73) Patentinhaber: **Asea Brown Boveri Aktienge-**
**sellschaft**
**Kallstadter Strasse 1**
**W-6800 Mannheim-Käfertal(DE)**

(72) Erfinder: **Münch, Albert**
**Am Ledigsberg 8**
**W-6930 Eberbach(DE)**
Erfinder: **Görner, Wilmut**
**Buchweg 6**
**W-6933 Mudau(DE)**
Erfinder: **Schwarz, Gerhard, Dipl.-Ing.**
**Zollerwaldstrasse 9**
**W-6939 Schönbrunn-Allemühl(DE)**

(74) Vertreter: **Rupprecht, Klaus, Dipl.-Ing. et al**
**c/o BBC Brown Boveri Aktiengesellschaft**
**ZPT Postfach 100351 Kallstadter Strasse 1**
**W-6800 Mannheim 1(DE)**

## Beschreibung

Die Erfindung betrifft ein elektrisches Installationsgerät, mit Anschlußklemmen, an denen eine Anschlußleitung anschließbar ist, und mit einer Zugentlastungseinrichtung für die Anschlußleitung, die an einem am Installationsgerät festlegbaren Fixierteil angebracht ist, das an seinem einen Ende die Zugentlastungseinrichtung und an seinem anderen Ende einen mit einer Kreuz- oder T-Form gebildeten Haken aufweist, der in eine daran angepaßte, an einer Seitenfläche des Installationsgerätes befindliche Ausnehmung eingelegt ist.

Es besteht haufig das Problem, daß an einem elektrischen Installationsgerät Anschlußleiter angeschlossen sind, die zugentlastet festgelegt werden müssen. Aus diesem Grund befindet sich an einem derartigen Installationsgerät eine Kabelschelle, mit der das Anschlußkabel festgeklemmt werden kann, wodurch die Zugentlastung bewirkt wird. Im allgemeinen wird die Kabelschelle an einem Zugentlastungskörper angebracht, der normalerweise am Installationsgerät angeformt oder festgeschraubt ist.

Aus der DE-U 86 15 643 ist ein Stecker für eine Steckverbindung für den elektrischen Anschluß von Kraftfahrzeuganhängern bekannt geworden, an dessen Steckerstiften Anschlußleiter angeschlossen sind, die mittels einer Zugentlastungsschelle fixiert sind. Darüberhinaus besitzt der Stecker eine Abdeckkappe, die als Schraubkappe ausgebildet ist.

Auch die AT-B 307 543 zeigt eine Zugentlastungsanordnung für einen Stecker, die als Kabelschelle ausgebildet ist und mit Steckerstiften in Verbindung gebracht werden kann. Die Zugentlastungsvorrichtung selbst ist zweiteilig und wird auf den Sockel des Steckers aufgeschnappt, wobei sich elastische, an der Zugentlastungseinrichtung angeordnete Lappen spreizen und nach vollständiger Montage am Sockel verrastet sind. Über den Sockel und den Zugentlastungskörper wird dann eine Kappe aufgesetzt, die mit der Zugentlastungsvorrichtung mittels einer Schraubverbindung fest verbunden wird.

Aus der DE-B-1 665 146 ist eine zugentlastete Kabeleinführung für eine Abzweigdose bekannt geworden, bei der das Fixierteil mit der Zugentlastungseinrichtung in eine Ausnehmung eingefügt und darin verrastend gehalten ist; die Ausnehmung zur Aufnahme des Fixierteiles ist in einer Verdickung in der Gehäusewand befestigt, indem es in Richtung der Ausnehmung eingefügt werden muß. Dabei wird das Fixierteil lediglich reibschlüssig in der Ausnehmung gehalten.

Aus der DE-A-3 231 416 ist eine Zugentlastungseinrichtung für ein elektrisches Installationsgerät der eingangs genannten Art bekannt geworden. Die Ausnehmung, in die der Haken seitlich eingefügt wird, ist durch zwei L-förmige Vorsprünge gebildet und die Verrastung innerhalb dieser Ausnehmung erfolgt durch eine Rastnase am Fixierteil. Die Befestigung einer Abdeckkappe, die die Zugentlastungseinrichtung überdeckt, ist bei der Ausführung nach der DE-A-3 231 416 nicht möglich.

Aufgabe der Erfindung ist es, ein Installationsgerät der eingangs genannten Art zu schaffen, bei dem sich die Zugentlastungseinrichtung und die Anschlußklemmen in einem durch eine Abdeckkappe und das Installationsgerät umgrenzten Raum befinden, wobei dieser Anschlußraum zusätzlich noch den Erfordernissen für erhöhte Sicherheit nach den Explosionsschutzvorrichtungen genügen soll.

Diese Aufgabe wird erfindungsgemäß dadurch gelöst, daß die Ausnehmung als von einer oberen, den Anschlußklemmen benachbarten Grundfläche ausgehende und sich dabei in Längsrichtung der Mittelachse des Installationsgerätes erstreckende Vertiefung, deren Tiefe der entsprechenden Abmessung des Hakens angepaßt ist, ausgebildet ist, so daß nach Einlegen des Hakens dieser sich bündig innerhalb der Seitenfläche des Installationsgerätes befindet, und daß eine Abdeckkappe über das Installationsgerät geschoben ist, deren eine Seitenwand die die Ausnehmung enthaltende Seitenfläche des Installationsgerätes überdeckt und den Haken innerhalb der Ausnehmung festhält.

In zweckmäßiger Ausführung ist das Fixierteil L-förmig ausgebildet, wobei der Haken durch den einen Schenkel gebildet ist und der andere Schenkel einen Aufsatz trägt, auf dem die Zugentlastungseinrichtung fixiert ist.

Erfindungsgemäß wird also die Abdeckkappe, die das Installationsgerät an dessen Seitenflächen umfaßt, sowohl zur Bildung des Anschlußraumes als auch zur Halterung des in die Ausnehmung an der einen Seitenfläche eingefügten Hakens und damit des Fixierteiles für die Zugentlastungseinrichtung benutzt. Nach dem Einfügen des Hakens in die Ausnehmung, was von außen quer zur Seitenfläche des Installationsgerätes geschieht, wird die Abdeckkappe darüber geschoben und, da der Haken bündig mit der Seitenfläche abschließt, wird dieser innerhalb der Ausnehmung praktisch spielfrei gehalten. Dadurch erhält man eine erhebliche Vereinfachung der Montage einer solchen Zugentlastungseinrichtung. Wenn das Installationsgerät selbst druckfest oder sonst explosionsgeschützt ausgebildet ist, kann das Installationsgerät zusammen mit der Abdeckkappe auch in einer explosions- oder schlagwettergefährdeten Atmosphäre verwendet werden.

Wegen der L-förmigen Ausgestaltung des Fixierteiles kann die Zugentlastungseinrichtung einfach dadurch an die vorgeschriebene Stelle gebracht werden, daß der Haken an dem L-förmigen Fixierteil in die Ausnehmung eingehängt und das Fixierteil durch Herumklappen in die richtige Stellung verbracht werden.

Nach einer weiteren vorteilhaften Ausgestaltung der Erfindung kann die Abdeckkappe am Installationsgerät festgerastet und leuiglich mittels eines Werkzeuges gelöst werden. Praktisch wird durch die Maßnahme des Festrastens und durch die Sicherstellung, daß die Abdeckkappe nur mittels des Werkzeuges gelöst werden kann, der Raum mit erhöhter Sicherheit, in dem sich die Zugentlastungseinrichtung befindet und der von dem Installationsgerät und der Abdeckkappe umgrenzt ist, vollendet.

Weitere vorteilhafte Ausgestaltungen der Erfindung sind den weiteren Unteransprüchen zu entnehmen. Dabei beschreiben die Ansprüche 4 und 5 die Maßnahmen, wie die Abdeckkappe am Installationsgerät befestigt ist, wogegen die kennzeichnenden Merkmale des Anspruches 6 angeben, wie die Abdeckkappe von dem Installationsgerät entfernt werden kann.

Die Erfindung ist also besonders vorteilhaft dort anwendbar, wo das Installationsgerät ein druckfest gekapseltes Schaltgerät ist und die Abdeckkappe einen Raum mit erhöhter Sicherheit gemäß den Explosionsschutzvorschriften umgibt. In diesem Falle ist die Verbindungsleitung von den Anschlußklemmen am Installationsgerät bis hin zur Zugentlastungseinrichtung unveränderbar festgelegt, was auch noch dadurch gewährleistet ist, daß die Abdeckkappe nicht auf das Installationsgerät aufgeschraubt, sondern in linearer Richtung festgerastet werden kann und dort nur mittels des Werkzeuges lösbar ist.

Anhand der Zeichnung, in der ein Ausführungsbeispiel der Erfindung dargestellt ist, sollen die Erfindung sowie weitere vorteilhafte Ausgestaltungen und Verbesserungen und weitere Vorteile näher erläutert und beschrieben werden.

Es zeigen:

Figur 1:    eine Seitenansicht auf ein elektrisches Installationsgerät, mit abgenommener Abdeckkappe;

Figur 2:    eine Schnittansicht gemäß einem Schnitt in einer Ebene parallel zur Zeichenebene der Figur 1, mit eingezeichnetem Werkzeug zwecks Abnehmen der Abdeckkappe;

Figur 3:    eine Seitenansicht gemäß Pfeilrichtung III der Figur 1;

Figur 4:    eine Seitenansicht gemäß Pfeilrichtung III der Figur 1, im zusammengebauten Zustand von Installationsgerät und Abdeckkappe;

Figur 5:    eine Schnittansicht gemäß der Linie V-V der Figur 4 und

Figur 6:    eine Schnittansicht entlang der Schnittlinie VI-VI der Figur 4.

Einem elektrischen Installationsgerät 10, das im folgenden auch als Grundgerät bezeichnet ist, ist eine Abdeckkappe 11 zugeordnet, die auf das Grundgerät 10 aufgesetzt ist. Das Grundgerät 10 kann beispielsweise ein elektrischer, durckfest gekapselter Schalter sein, aus dem Anschlußklemmen 12, 13 zünddurchschlagsicher (nicht näher beschrieben) herausgeführt sind. Innerhalb der Abdeckkappe 11 zwischen der Abdeckkappe und dem Grundgerät 10 ist ein Raum 14 erhöhter Sicherheit vorgesehen, wobei die Abdeckkappe 11 das Grundgerät 10 umfaßt; das Grundgerät 10 besitzt einen umlaufenden Absatz 15, dessen Dicke der Wanddicke der Abdeckkappe 11 entspricht. An einer der Seitenwände des Grundgerätes innerhalb des Absatzes 15 ist eine längliche Ausnehmung 16 vorgesehen, die von einer oberen, an den Anschlußklemmen 12 und 13 benachbarten Grundfläche 17 am Grundgerät 10 ausgeht und sich dabei in Längsrichtung der Mittelachse des Grundgerätes 10 erstreckt. In geringem Abstand zur Grundfläche 17 besitzt die Ausnehmung 16 beidseitige, eine T- bzw. Kreuzform damit bildende Erweiterungen 18 und 19. In diese Ausnehmung 16 paßt der Schenkel 20 eines angenähert L-förmigen Fixierteiles 21. Das freie Ende des hinteren Schenkels 20 besitzt beidseitig Noppen 22 und 23, wodurch eine der Kreuzform der Ausnehmung 16 angepaßte Kreuz- oder T-Form am Schenkel 20 gebildet wird. Die Dicke des Schenkels 20 entspricht der Tiefe der Ausnehmung 16, so daß die obere Fläche des Schenkels 20 mit der Seitenwand zwischen der Grundfläche 17 und dem Absatz 15 bündig ist.

Aus der Figur 3 ist ersichtlich, daß der Schenkel 20 gabelförmig ausgebildet ist und so zwei Gabelschenkel 20b und 20c bildet. Die Noppen 22 und 23 befinden sich an der Außenfläche der beiden Gabelschenkel 20b und 20c; die beiden Gabelschenkel 20 b und 20 c wirken dadurch federnd, so daß das Einfügen der Noppen 22/23 in die Ausnehmungen 18, 19 erleichtert ist.

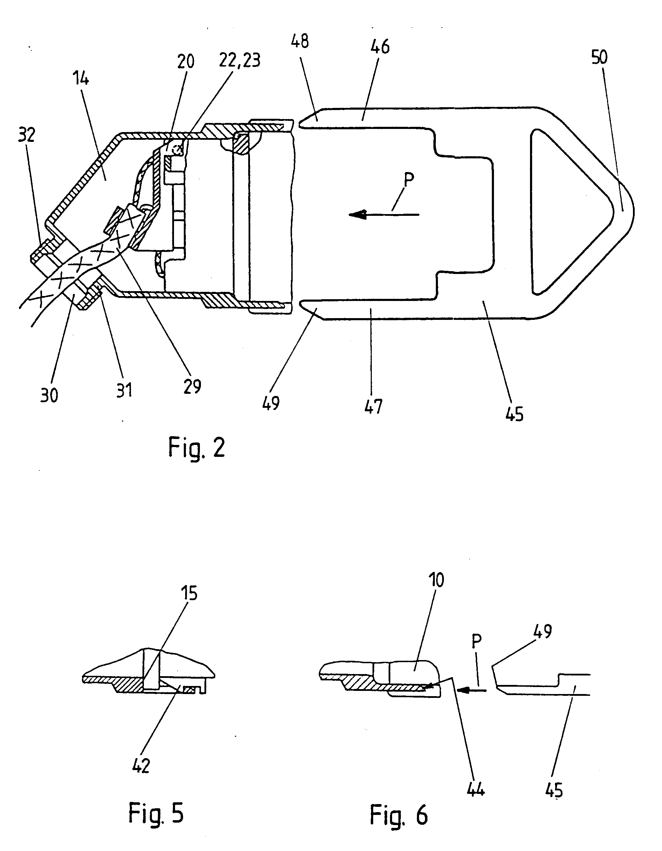

Der andere Schenkel 20a des Fixierteiles 21 liegt flach auf der Grundfläche 17 an und besitzt einen T-förmig ausgebildeten Aufsatz 24, dessen der Grundfläche 17 entfernt liegende Fläche 25 schräg ausgerichtet ist; auf dieser Schrägfläche 25 ist eine Klemmschelle 26 mittels Schrauben 27 und 28 fixiert. Diese Klemmschelle 26 dient als Zugentlastungsklemmschelle für ein strichliert in Figur 2 eingezeichnete Anschlußleitung 29, die durch den Zwischenraum zwischen der Klemmschelle 26 und der Fläche 25 hindurchgeführt und gegen die Fläche 25 von der Klemmschelle 26 festgeklemmt wird. Die freien Enden des Kabels 29 sind dann zu den Anschlußklemmen 12 und 13 geführt.

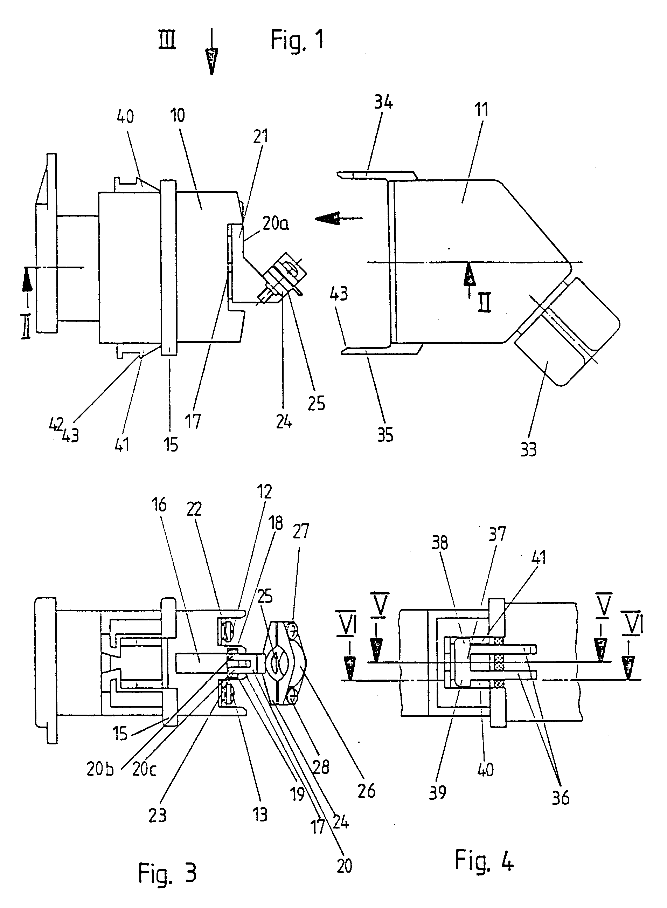

Die Abdeckkappe 11 besitzt eine Ausgangsöffnung 30, die von einem Stutzen 31 umgeben ist, der ein Außengewinde 32 aufweist, auf das eine Schraubdichtung 33 (Figur 1) aufgeschraubt ist.

Das Fixierteil 21 wird im Inneren des druckfesten Raumes mittels der Abdeckkappe 11 und durch Zusammenwirken der seitlichen Noppen 22 und 23 mit den Erweiterungen 18 und 19 fixiert. Die Schräge der Fläche 25 bestimmt sich durch die Stelle, an der die Ausgangsöffnung 30 vorgesehen ist. Wäre beispielsweie die Ausgangsöffnung 30 genau im Bereich der Mittelachse des Grundgerätes 10, dann würde der Aufsatz 24 eine senkrecht zur Grundfläche 27 und praktisch mit der Ausgangsöffnung 30 fluchtende Klemmfläche aufweisen; würde die Öffnung 30 parallel zur Grundfläche 17 verlaufen, dann wäre auch die Klemmfläche 25 parallel zur Grundfläche 17 ausgerichtet.

Die Befestigung der Abdeckkappe 11 am Grundgerät 10 erfolgt über eine Verrastungsverbindung. Zu diesem Zweck sind - die Abdeckkappe 11 überragend - an sich gegenüberliegenden Flächen federnde Rastarme 34 und 35 angeformt, die einen Doppelarmsteg 36 bilden, dessen freie Stegenden von einem Querteil 37 übergriffen sind, welches Querteil 37 beidseitig die Doppelarmstege 36 mit Rastvorsprüngen 38 bzw. 39 überragt. Am Grundgerät 10 sind, wie aus der Figur 1 ersichtlich, beidseitig je zwei sägezahnartige Vorsprünge 40 und 41 vorgesehen, deren senkrechte Kante 42 von dem Absatz 15 abgewandt ist. Der Abstand der beiden Vorsprünge 40 und 41 ist so gewählt, daß die Doppelarmstege 36 innerhalb der beiden Vorsprünge liegen. Im zusammenmontierten Zustand hintergreifen die Rastvorsprünge 38 und 39 die senkrechte Kante 42 beider Vorsprünge 40 und 41, wodurch die Verrastung bewirkt wird.

Dabei ist selbstverständlich, daß beide Vorsprünge 40 und 41 auf je beiden entgegengesetzten Seiten des Grundkörpers angeordnet sind; in der Ansicht nach Figur 1 sind die beiden Vorsprünge 40 und 41 auf jeder Seite zu erkennen.

Der Quersteg bzw. das Querteil 37 ist zu seinem freien Ende hin mit einer Abschrägung 43 versehen, die mit der Außenwand des Grundgerätes 10 eine von der Abdeckkappe wegweisend offene V-Ausnehmung 44 bildet. Diese V-Ausnehmung 44 dient zum Einführen eines Werkzeuges 45, um die Rastvorsprünge 38 und 39 über die senkrechte Wand hinweg über die sägezahnartigen Vorsprünge 40 und 41 zu heben, wodurch die Abdeckkappe von dem Grundgerät 10 gelöst werden kann. Das Werkzeug ist A-förmig, wobei die beiden Längsstege 46 und 47 mit den V-Ausnehmungen 44 angepaßten Zuspitzungen 48 und 49 versehen sind. Die Spitze 50 der A-Form ist quasi als Handgriff zu benutzen. Durch Bewegung des Handgriffes in Pfeilrichtung P werden die Rastarme 34 und 35 bzw. die Doppelstege 36 und damit die Rastvorsprünge 38 und 39 von den Vorsprüngen 40 und 41 entfernt bzw. über diese herausgebogen, so daß die Abdeckkappe problemlos abgezogen werden kann.

## Patentansprüche

1. Elektrisches Installationsgerät (10), mit Anschlußklemmen (12, 13), an denen eine Anschlußleitung (29) anschließbar ist, und mit einer Zugentlastungseinrichtung (25, 26, 27, 28) für die Anschlußleitung (29), die an einem am Installationsgerät (10) festlegbaren Fixierteil (21) angebracht ist, das an seinem einen Ende die Zugentlastungseinrichtung (25, 26, 27, 28) und an seinem anderen Ende einen mit einer Kreuz- oder T-Form gebildeten Haken (20, 22, 23) aufweist, der in eine daran angepaßte, an einer Seitenfläche des Installationsgerätes (10) befindliche Ausnehmung (16) eingelegt ist, dadurch gekennzeichnet, daß die Ausnehmung (16) als von einer oberen, den Anschlußklemmen (12, 13) benachbarten Grundfläche ausgehende und sich dabei in Längsrichtung der Mittelachse des Installationsgerätes (10) erstreckende Vertiefung, deren Tiefe der entsprechenden Abmessung des Hakens (20, 22, 23) angepaßt ist, ausgebildet ist, so daß nach Einlegen des Hakens (20, 22, 23) dieser sich bündig innerhalb der Seitenfläche des Installationsgerätes (10) befindet, und daß eine Abdeckkappe (11) über das Installationsgerät (10) geschoben ist, deren eine Seitenwand die die Ausnehmung (16) enthaltende Seitenfläche des Installationsgerätes (10) überdeckt und den Haken (20, 22, 23) innerhalb der Ausnehmung (16) festhält.

2. Installationsgerät nach Anspruch 1, dadurch gekennzeichnet, daß das Fixierteil (21) L-förmig ausgebildet ist, wobei der Haken (20, 22, 23) durch den einen Schenkel (20) gebildet ist und der andere Schenkel (20a) des Fixierteiles (21) einen Aufsatz (24) trägt, auf dem die Zugentlastungseinrichtung (25, 26, 27, 28) fixierbar ist.

3. Installationsgerät nach einem der Ansprüche 1 und 2, dadurch gekennzeichnet, daß die Abdeckkappe (11) am Installationsgerät (10) und nur mittels eines Werkzeuges (45) lösbar ist.

4. Installationsgerät nach Anspruch 3, dadurch gekennzeichnet, daß an der Abdeckkappe (11), deren Rand überragend, Rastarme (34, 35) vorgesehen sind, an deren freiem Ende je ein Querteil (37) vorgesehen ist, das hinter einen sägezahnartigen Vorsprung (40, 41) greift und so die Abdeckkappe (11) am Installationsgerät 10) fixiert.

5. Installationsgerät nach Anspruch 4, dadurch gekennzeichnet, daß die Rastarme (34, 35) als Doppelarmstege ausgebildet sind, die von dem beide Doppelarmstege (36) übergreifenden Querteil (37) überdeckt sind.

6. Installationsgerät nach Anspruch 5, dadurch gekennzeichnet, daß das Querteil (37) sich zu seinem freien Ende hin, also in Verlängerung der Rastarme (34, 35), verjüngt, so, daß zwischen der benachbarten Außenfläche des Installationsgerätes (10) und der Verjüngungsfläche des Querteiles (37) eine V-förmige Ausnehmung (44) bildet, in die die Spitze des Werkzeuges (45) einschiebbar ist und so das Querteil (37) über die sägezahnartigen Vorsprünge (40, 41) hebt.

## Claims

1. Electrical wiring accessory (10) with connecting terminals (12, 13) to which a connecting line (29) can be connected, and with a strain relief device (25, 26, 27, 28), for the connecting line (29), which is attached to a fixing part (21) which can be fixed to the wiring accessory (10) and which exhibits at one end the strain relief device (25, 26, 27, 28) and at its other end a hook (20, 22, 23), formed with a cross or T shape, which is inserted into a matching recess (16) located at One side area of the wiring accessory (10), characterised in that the recess (16) is constructed as an indentation, the depth of which matches the corresponding dimension of the hook (20, 22, 23), which extends in the longitudinal direction of the centre axis of the wiring accessory (10), starting from an upper base area adjacent to the connecting terminals (12, 13), so that after the hook (20, 22, 23) has been inserted it is located flush inside the side area of the wiring accessory (10), and that a covering cap (11) is pushed over the wiring accessory (10), one side wall of which covers the side area, containing the recess (16), of the wiring accessory (10) and holds the hook (20, 22, 23) tight within the recess (16).

2. Wiring accessory according to Claim 1, characterised in that the fixing part (21) is constructed to be L-shaped, the hook (20, 22, 23) being formed by one leg (20) and the other leg (20a) of the fixing part (21) carrying a top (24) on which the strain relief device (25, 26, 27, 28) can be fixed.

3. Wiring accessory according to one of Claims 1 and 2, characterised in that the covering cap (11) can be detached from the wiring accessory (10) and only by means of a tool (45).

4. Wiring accessory according to Claim 3, characterised in that on the covering cap (11), projecting over its edge, locking arms (34, 35) are provided, on the free end of which in each case a crosspart (37) is provided which engages behind a sawtooth-like projection (40, 41) and thus fixes the covering cap (11) on the wiring accessory (10).

5. Wiring accessory according to Claim 4, characterised in that the locking arms (34, 35) are constructed as double arm webs which are covered by the crosspart (37) projecting over both double arm webs (36).

6. Wiring accessory according to Claim 5, characterised in that the crosspart (37) tapers towards its free end, that is to say in extension of the locking arms (34, 35), in such a manner that between the adjacent outer surface of the wiring accessory (10) and the tapering surface of the crosspart (37) a V-shaped recess (44) forms, into which the tip of the tool (45) can be inserted, and thus lifts the crosspart (37) over the sawtooth-like projections (40, 41).

## Revendications

1. Appareil d'installation électrique (10), comportant des bornes (12, 13) auxquelles une ligne de raccordement (29) peut être reliée et un dispositif de décharge de traction (25, 26, 27, 28) pour soulager la ligne de raccordement (29), ce dispositif étant disposé sur une partie fixation (21), laquelle peut être fixée sur l'appareil (10), présente en une première extrémité le dispositif de décharge de traction (25, 26, 27, 28) et en son autre extrémité un crochet doté d'une forme en croix ou en T (20, 22, 23), lequel est engagé dans un évidement adapté (16) situé dans une surface latérale de l'appareil (10), caractérisé par le fait que l'évidement (16) est réalisé en tant que dépression partant d'une surface de base supérieure voisine des bornes (12, 13), s'étendant suivant la direction longitudinale de l'axe médian de l'appareil (10) et dotée d'une profondeur adaptée à la dimension correspondante du crochet (20, 22, 23), de sorte qu'après l'introduction du crochet (20, 22, 23) ce dernier se trouve en condition d'affleurement à l'intérieur de la surface latérale de l'appareil (10), et par le fait qu'un capot (11) emboîté par-dessus l'appareil (10) comporte une paroi latérale qui recouvre la surface latérale de l'appareil (10) dans laquelle l'évidement (16) est contenu et immobilise le crochet (20, 22, 23) à l'intérieur de l'évidement (16).

2. Appareil selon revendication 1, caractérisé par le fait que la partie fixation (21) est en forme de L dont la première branche forme le crochet (20, 22, 23), l'autre branche (20a) de la partie fixation (21) portant un organe rapporté (24) sur lequel le dispositif de décharge de traction (25, 26, 27, 28) peut être fixé.

3. Appareil selon l'une des revendications 1 et 2, caractérisé par le fait que le capot (11) sur l'appareil (10) ne peut être enlevé qu'au moyen d'un outil (45).

4. Appareil selon revendication 3, caractérisé par le fait que le capot (11) comporte, formant des saillies sur son bord, des pattes d'enclenchement (34, 35) ayant chacun, en son extrémité libre, une partie transversale (37) qui s'engage derrière un relief du genre dent de scie (40, 41) et fixe ainsi le capot (11) sur l'appareil (10).

5. Appareil selon revendication 4, caractérisé par le fait que les pattes d'enclenchement (34, 35) sont réalisées en tant que barrettes doubles qui sont surmontées par la partie transversale (37) se conjuguant aux deux barrettes (36).

6. Appareil d'installation selon revendication 5, caractérisé par le fait que la partie transversale (37) s'effile en direction de son extrémité libre, donc dans le prolongement des bras d'enclenchement (34, 35), de façon à former, entre la surface extérieure voisine que comporte l'appareil (10) et la surface effilée de la partie transversale (37), un évidement (44) en forme de V dans lequel on peut introduire la pointe de l'outil (45) et soulever ainsi la partie transversale (37) au-delà des reliefs en forme de dent de scie (40, 41).

III ↓     Fig. 1

Fig. 3

Fig. 4

EP 0 257 601 B1

Fig. 2

Fig. 5

Fig. 6

8